# EUROPEAN PATENT APPLICATION

(11) **EP 2 684 750 A1**
(43) Date of publication of application: **15.01.2014**
(21) Application number: 12176235.5
(22) Date of filing: 12.07.2012
(51) Int. Cl.: B60S 9/08

(54) **Mechanical jack**

(71) Applicant: Servomech S.p.A. Con Socio Unico, Anzola Dell'Emilia (IT)
(72) Inventor: Cataldo, Vito, 41043 COLOMBARO DI FORMIGINE (IT)
(74) Representative: Bergadano, Mirko

(57) **Abstract**

A mechanical jack (10**) comprising a casing (11**) which encloses a reduction unit (12**) and a linear actuator device (13**).

The jack (10**) is characterized by the fact that the driven gear (14**) of the reduction unit (12**) is directly coupled, i.e. without the interposition of further mechanical elements, with a nut or more nuts (19**) of the linear actuator device (13*, 13**).

## Description

The present invention relates to a mechanical jack.

As known, the jack is a mechanical system that transforms a rotary motion, provided, for example, by an electric, hydraulic or pneumatic motor, in a linear motion.

In general, a mechanical jack comprises two main elements:
(1) a (worm)/(helical wheel) reduction unit, or a bevel gear reduction unit, and
(2) a linear actuator device, comprising, in turn, a trapezoidal screw, ball screw, planetary roller screw, or hydrostatic screw mating.

It is well known, also, that the main function of a mechanical jack is to generate an axial force able to move or position a given object, with relatively low use of force or torque thanks to the function performed by the reduction unit.

It is also known that there are different types of jacks, each of which has specific features suitable for various application fields.

Depending on the combination of the reduction unit and linear actuator device that is chosen, considerable differences of performances rendered by the system can be obtained; this is due to the efficiency of the individual components that constitute the jack itself.

Some comparative examples are reported below in relation to the efficiency of the different types of jacks:
- considering a jack comprising a (worm)/(helical wheel) reduction unit coupled to a linear actuator device realized with trapezoidal screw a total efficiency of the jack between 10% and 40% is obtained;
- whereas, instead, a jack comprising a (worm)/(helical wheel) reduction unit coupled to a linear actuator device realized with recirculating ball screw a total efficiency of the jack between 30% and 70% is obtained.

Therefore, while maintaining the required performance of the two systems (speed and applied load) is possible, by adopting the second solution, to obtain a reduction of the installed power equal to approximately 45 - 50%.

Because of this pronounced reduction of required power a mechanical jack has been developed, in accordance with the present invention, which derives from said second solution; this jack of an integrated type comprises a reduction unit and a linear actuator device constituted by a rotating and translating element.

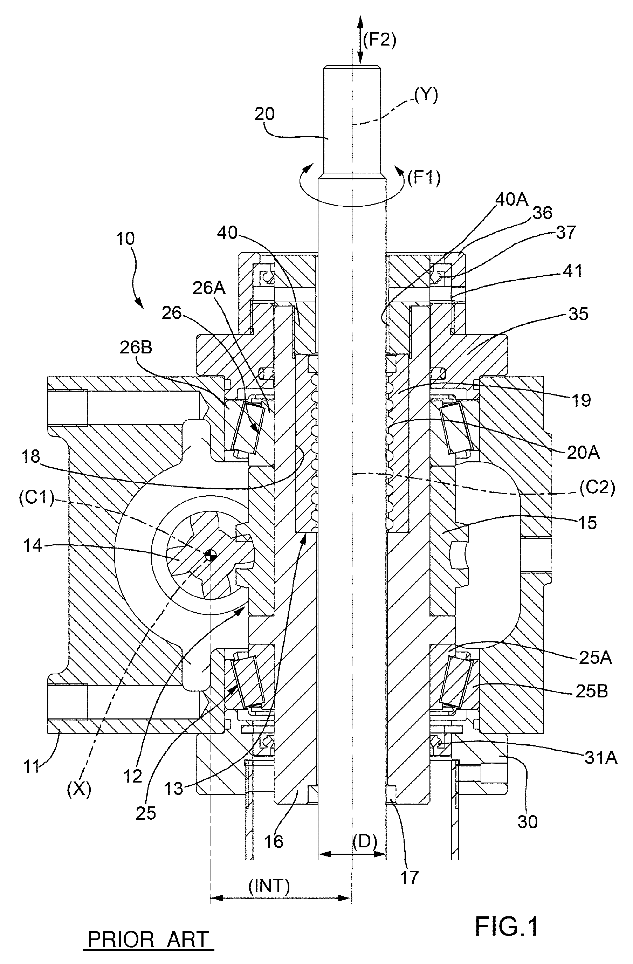

To better understand the scope of the invention it is felt useful to illustrate in the attached Figure 1 a traditional solution, already present in the state of the art where are identified all the characteristic elements common to said known system and to those belonging to the solutions of the present invention (see below).

In Figure 1, with number 10 is indicated, as a whole, a mechanical jack of traditional type.

The mechanical jack comprises a casing 11 which encloses a (worm)/(helical wheel) reduction unit 12 and a linear actuator device 13, comprising, in turn, a rotating and translating element.

The reduction unit 12 comprises, in known manner, a worm screw 14 (of center (C1)), symmetrically arranged around an axis (X), which meshes with a crown 15 (of center (C2)) symmetrically arranged around an axis (Y). Typically, the worm screw 14 having an involute, grinded profile, is made from hardened and tempered steel and is driven in rotation by an electric motor (not shown). In turn, the crown 15 is preferably made of bronze.

The crown 15 is keyed onto a hub 16 provided with a scraper 17.

In the hub 16 is formed a recess 18, inside which is located a nut 19. The hub 16 and the nut 19 are rigidly integral to one another.

The nut 19 is part of the said linear actuator device 13, which also comprises a rod 20 (of diameter (D)) provided with a threaded portion 20A.

In a known manner, in the space which is located between the threads of the nut 19 and the threaded portion 20A is housed a plurality of balls (not shown) to achieve the desired recirculating ball connection between the two mechanical elements.

From opposite sides with respect to the axis (X) is arranged a pair of bearings 25, 26, in this case cone roller bearings; the bearings 25, 26 may also be thrust bearings or angular contact ball bearings.

In particular, each bearing 25, 26 respectively has an inner ring 25A, 26A, and an outer ring 25B, 26B between which are located the cone rollers.

While the inner rings 25A, 26A are keyed on the outer surface of the hub 16, the respective outer rings 25B, 26B are integral with the casing 11, or, alternatively, can be housed in the flange or ring nut 30 and 35.

The bearing 25 is held against the casing 11 by the flange or ring nut 30 provided with a gasket 31A.

Similarly, the bearing 26 is held in place by a corresponding flange or ring nut 35 in turn provided with a respective gasket 37 retained by a cover 36. Note also the presence in correspondence to the flange 35 of a tube 40 which keeps the nut 19 in place from above. The tube 40 has a central through hole 40A of axis (Y).

In special cases only, or if the overall dimensions allow, in the upper part of the tube a greasing radial hole 41 can be made through which a maintenance worker causes (by known means and not illustrated) a suitable lubricating fluid to flow, which, by gravity, will then flow into the free space that there is between the outer surface of the rod 20 and the wall of the through hole 40A. Obviously the lubricating fluid, always by gravity, then will flow into the underlying recirculating ball system.

In most cases the re-lubrication point, consisting of the greasing radial hole, is not present, so it is necessary to perform a rather frequent periodic maintenance.

By well known mechanical phenomena, a rotation of the crown 15 around the axis (Y) in accordance with one of the two directions indicated by a double-headed arrow (F1) will result in an axial displacement of the rod 20 in accordance with one of the two directions given by a double-headed arrow (F2), thereby completing the transformation of a rotary motion of the crown 15, induced by the rotation of the worm screw 14, in a translatory motion of the rod 20.

In such a case, having to interface the nut 19 to the crown 15 of the reduction unit 12 through the use of the hub 16, it is necessary to reduce the diametrical dimensions of the nut 19 itself, thus reducing also the diameter (D) of the rod 20; by doing so the under-sizing of the rod 20 itself takes place which constitutes the main supporting element of the system on which acts the load to be moved or lifted.

Since a standardized axle base (INT) of the reduction unit 12 is always adopted, the current trend is to fix the nut 19 laterally with respect to the crown 15, just as was shown in Figure 1.

However, by doing so the angular stiffness of the system is significantly reduced; it is recommended, therefore, to use an additional guide on the rod 20 to reduce this effect of misalignment between the threaded portion 20A and the nut 19.

In other words, by providing a jack with a hub 16 and a relative recess 18, there is the possibility of creating a "standard" housing that allows to provide the jack with the exclusion of the linear actuator device (ball screw), allowing a subsequent insertion of the desired linear actuator device (also through the use of further reducing bushes), thus making the jack a pure and simple reduction unit.

The purpose of the present invention is, therefore, to provide a mechanical jack which is free from the drawbacks described above and, at the same time, is of easy and economic implementation.

Therefore, according to the present invention a mechanical jack is provided, as claimed in Claim 1 or in any of Claims depending directly or indirectly on Claim 1.

For a better understanding of the present invention, two preferred embodiments are now described, purely by way of nonlimiting examples and with reference to the accompanying drawings, wherein:
- Figure 2 shows a longitudinal section of a first embodiment of a mechanical jack in accordance with the present invention;
- Figure 3 shows a longitudinal section of a second embodiment of a mechanical jack in accordance with the present invention. In Figure 2, with 10* is indicated, as a whole, a mechanical jack made according to the teachings of the present invention.

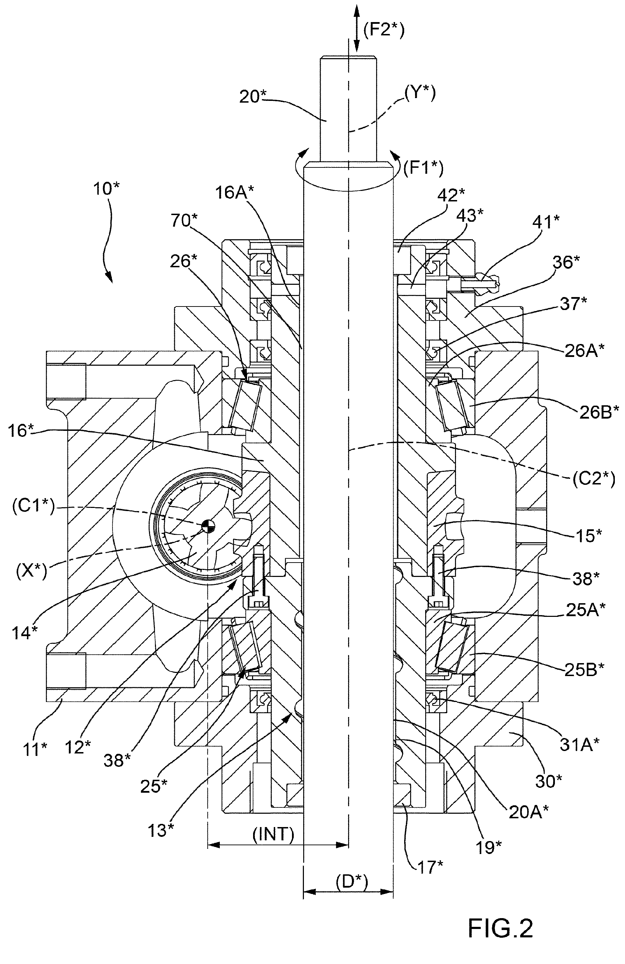

Also worth mentioning is that the elements shown in Figure 2, which are identical, or similar, to the corresponding ones found in Figure 1 have been marked with the same numbers with the addition of asterisk.

In Figure 2 it is possible to see a first example of how a crown 15* (of center C2*) of a reduction unit 12* is supported by a hub 16 * and by a nut 19*.

The nut 19* is mechanically fixed directly to the crown 15* of the reduction unit 12* through a plurality of screws 38*, making the nut 19* and the crown 15* integral with each other and self-supporting, thereby eliminating all those components, for example the hub 16 of Figure 1, used as an interface in conventional systems (see Figure 1).

In the first embodiment of the present invention shown in Figure 2 the nut 19* is directly supported by the cone roller bearing 25*, which releases stress directly onto the cover 30* and onto the casing 11*.

In the same way the support hub 16* of the crown 15* is pushed against the inner ring 26A* of the bearing 26*, which, in turn, releases stress onto the cover 36* and onto the casing 11*.

All this confers upon the system a high axial and angular stiffness, also reflecting high performance and high durability of the system itself.

By comparing Figures 1 and 2 it is possible to note that with the same axle base (INT) of the reduction units 12, respectively, 12*, the diameter (D*) of the rod 20* (Figure 2) appears to be greater than the diameter (D) of the stem 20 (Figure 1). The rod 20* is provided with a threaded portion 20A* coupled to the nut 19* in a known manner with the usual recirculating ball system (see above).

All this is in favour of the robustness of the system and of its load capacity with the same dimensions of the reduction unit 12*, 12, and with the same external dimensions of the jack.

A solution that envisages the joint use of the hub 16* and the nut 19* directly coupled to the crown 15* allows to create a reserve chamber 16A*, interposed between the hub 16* and the rod 20*, for the lubricant of the same linear actuator 20A*.

In addition, the system envisages at least one greasing radial hole 41* formed on the cover 36* that ensures the correct amount of lubricant in any angular position the hub 16* and the nut 19* may be located. Through the greasing hole 41* and the radial holes 43* made on the hub 16* any operator can enter (by way of known and not illustrated means) the suitable lubricant, which, by gravity, then would reach the reserve chamber 16A* that is provided between the outer surface of the rod 20* and the wall of the through hole of the hub. Obviously the lubricating fluid, always by gravity, will pass into the underlying linear actuator element 20A*. For both the hub 16*, and the nut 19*, at the respective ends, sealing scrapers 17* and 42 are provided, which guarantee the maintenance of the lubricant inside the reserve chamber 16A*.

This solution creates a separate area within the jack, dedicated to the exclusive lubrication of the linear actuator, by doing so an area dedicated to the lubrication of the same linear actuator and an area dedicated to the lubrication of the reduction unit are provided, wherein this latter corresponds to the free space between the casing 11* and the reduction unit 12*. This solution is not available on all conventional systems because it is not always possible to create or adopt a solution of said type.

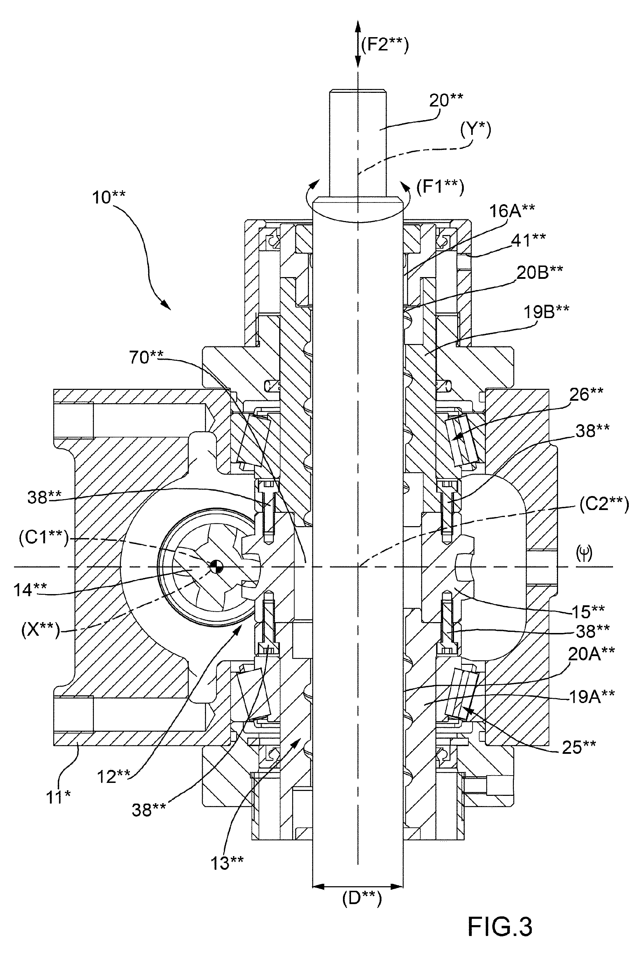

A further embodiment of the present invention is illustrated in Figure 3.

Also in this case the elements shown in Figure 3 that are identical, or similar to the corresponding ones found in Figures 1, 2 have been designated with the same numbers with the addition of two asterisks.

Here, the configuration of the jack 10** distinguishes itself from the conventional versions, for example that illustrated in Figure 1, for the fact that two nuts 19A**, 19B**, are used respectively arranged beneath and above the plane (ψ) (only the trace of the plane (ψ) is shown in Figure 3) which passes through the axis (C1**) of the worm screw 14** and is normal to the axis (Y*) of the crown 15** of the reduction unit 12**.

In this case with the same axle base (INT) the diameter (D**) of the rod 20** (Figure 3) is equal to the diameter (D*) of the rod 20* shown in Figure 2.

In Figure 3 can be seen how the different components are arranged and how they interact with each other.

The two nuts 19A**, 19B** are mechanically fixed to the crown 15** of the reduction unit 12** by way of screws 38**, that make the three elements integral with each other and self-supporting with respect to conventional systems. All the components used as an interface are also removed, making the structure of the system easier.

The lubrication system, not shown in Figure 3, is similar to that of the solution shown in Figure 2.

The free space 70** created between the crown 15** and the two nuts 19A** and 19B**, serves as a reserve chamber for the lubricant of the linear actuator.

The use of two nuts 19A**, 19B** makes the system balanced under the effect of axial and radial loads applied to the rod 20*; at the same time is significantly increased the load capacity and the angular stiffness of the rod 20** since the two nuts 19A**, 19B** serve as support to the rod 20** itself.

In the new configuration illustrated in Figure 3, the jack 10** has better balance therefore lends itself to be mounted both straight and reversed, without difference in performance with pull and/or thrust load.

On the contrary, in the conventional configuration shown in Figure 1 the specific fitting direction of the nut 19 must be respected with respect to the direction of the applied load, otherwise there will likely be differences in performance, but especially large differences in durability of the entire system.

Furthermore, in the embodiment shown in Figure 3, since there is a better overall balance of the whole mechanical part, there is a significant optimization of the durability of the following components:
- (screw)/(crown) reduction unit;
- bearings; and
- screw and nut.

The present invention allows to obtain the following advantages:
- reduction of the number of interface components between the reduction unit and the nut of the rotating and translating component;
- increase of the space in which to interpose the nut or nuts;
- maximization of the diameter of the rod of the rotating and translating system, and, therefore, increase of the load capacity;
- guarantee of a better behavior under load, giving the system better balance under the action of loads acting on the screw, both in compression and in traction;
- high rigidity of the system, due to the increase of resistant sections;
- increase of the dynamic capabilities of the entire system;
- improved balance of the durability of the respective components (linear actuator, bearings and reduction unit);
- better behavior under the effect of peak loads;
- simplified re-lubrication;
- no oil leaking thanks to the gaskets placed on all the rotating components;
- periodical maintenance practically canceled; and
- significant increase in performance with the same dimensions.

## Claims

1. Mechanical jack (10*; 10**) comprising a casing (11*; 11**), which houses a reduction unit (12*; 12**) and a linear actuator device comprising a rotating and translating (screw)/(nut) system (13*; 13**);
jack (10*; 10**) **characterised in that** the driven gear (14*; 14**) of said reduction unit (12*; 12**) is directly coupled, i.e. without the interposition of further mechanical elements, with at least one nut (19*; 19**) of said linear actuator device (13*; 13**).

2. Mechanical jack (10**), as claimed in Claim 1, **characterised in that** it presents a reserve chamber (16A*; 16A**), which is dedicated to the lubricant of the linear actuator (70*, 70**), is separated from the lubrication chamber of the reduction unit (12*, 12**), presents a fixed lubrication/re-lubrication point, is easily accessible, and provides the possibility of lubricating the linear actuator in whatever angled position it may find itself.

3. Mechanical jack (10**), as claimed in any of the previous Claims, **characterised in that** the nut (19*) is directly supported by at least one rotating support element (25*).

4. Mechanical jack (10**), as claimed in Claim 1, **characterised in that** it comprises two nuts (19A**, 19B**), which are arranged beneath and above a plane (ψ), which crosses the normal section at the axis of the linear actuator (C2**) and the axis of the input shaft (C1**).

5. Mechanical jack (10**), as claimed in Claim 4, **characterised in that** it comprises at least two rotating support elements (25**, 26**), which are arranged beneath and above a plane (ψ).
